# EUROPÄISCHE PATENTANMELDUNG

(11) **EP 4 177 811 A1**
(43) Veröffentlichungstag der Anmeldung: **10.05.2023**
(21) Anmeldenummer: 21206260.8
(22) Anmeldetag: 03.11.2021
(51) Int. Cl.: G06Q 30/02, G06Q 30/06

(54) **VERFAHREN UND DIENST ZUM ERMITTELN EINER KAUFEMPFEHLUNG**

(71) Anmelder: Deutsche Telekom AG, 53113 Bonn (DE)
(72) Erfinder: MINOW, Jascha, 64625 Bensheim (DE); JAHN, Carl, 65191 Wiesbaden (DE); EL MALLOUKI, Said, 56329 St.Goar (DE)
(74) Vertreter: RDL Patentanwälte PartG mbB

(57) **Zusammenfassung**

Verfahren zum Ermitteln einer Kaufempfehlung, bei dem ein von einem stationären Server betriebenes Backend eine Kaufempfehlung betreffend ein von einem Interessenten zum Kaufen ausgewähltes Produkt ermittelt und über ein Netzwerk zu einem von einem Endgerät des Nutzers betriebenen Frontend sendet, sowie Kaufempfehlungsdienst und Computerprogrammprodukt.

## Beschreibung

Die Erfindung betrifft ein Verfahren zum Ermitteln einer Kaufempfehlung, bei dem ein von einem stationären Server betriebenes Backend eine Kaufempfehlung betreffend ein von einem Interessenten zum Kaufen ausgewähltes Produkt ermittelt und über ein Netzwerk zu einem von einem Endgerät des Interessenten betriebenen Backend sendet. Ferner betrifft die Erfindung einen Kaufempfehlungsdienst sowie ein Computerprogrammprodukt.

Verfahren zum Ermitteln einer Kaufempfehlung gehören in unterschiedlichen Ausgestaltungen zum Stand der Technik und dienen dazu, einen Interessenten bei einem Entscheiden für oder gegen ein Kaufen eines Produkts zu unterstützen. Üblicherweise wählt der Interessent zunächst mittels eines Endgeräts das Produkt zum Kaufen aus.

Daraufhin wird von einem Backend eine das ausgewählte Produkt betreffende Kaufempfehlung ermittelt, indem das Backend eine Bewertung des Produkts durch Mitteln von einer Mehrzahl von durch Käufer des Produkts eingegebenen Bewertungen berechnet und die berechnete Bewertung als die Kaufempfehlung ermittelt und für den Interessenten bereitstellt. Die bereitgestellte Kaufempfehlung kann für den Interessenten ein wichtiges Entscheidungskriterium für oder gegen ein Kaufen des ausgewählten Produkts darstellen.

Allerdings geben nur relativ wenige Käufer eines Produkts nach dem Kaufen eine Bewertung des gekauften Produkts ein. Zudem erfolgen einerseits viele schlechte Bewertungen aus einem emotionalen Impuls wütender Unzufriedenheit mit dem Produkt heraus und werden andererseits gute Bewertungen häufig von Verkäufern gekauft. Aus Produktbewertungen von Käufern berechnete Kaufempfehlungen sind daher meist weder repräsentativ noch zutreffend.

Abgesehen davon wird ein Produkt von unterschiedlichen Käufern mit unterschiedlichen Erwartungen gekauft. Dieser Umstand kann zu unterschiedlichen Bewertungen des Produkts führen, da dasselbe Produkt kaum jede mögliche Erwartung eines Käufers erfüllen kann. Entsprechend können von Käufern abgegebene Bewertungen für den Interessenten aufgrund abweichender Erwartungen nicht maßgeblich sein.

Es ist daher eine Aufgabe der Erfindung, ein Verfahren zum Ermitteln einer Kaufempfehlung für ein von einem Interessenten ausgewähltes Produkt vorzuschlagen, welches eine hohe Verlässlichkeit und eine hohe Relevanz der Kaufempfehlung für den Interessenten gewährleistet und keine Produktbewertung verwendet. Weitere Aufgaben der Erfindung sind, einen Kaufempfehlungsdienst und ein Computerprogrammprodukt bereitzustellen.

Nachfolgend werden ein das Produkt auswählender Interessent als ein erster Nutzer und von dem ersten Nutzer verschiedene Personen, beispielsweise Käufer des Produkts, als zweite Nutzer bezeichnet.

Ein Gegenstand der Erfindung ist ein Verfahren zum Ermitteln einer Kaufempfehlung, bei dem ein von einem stationären Server betriebenes Backend eine Kaufempfehlung betreffend ein von einem Interessenten zum Kaufen ausgewähltes Produkt ermittelt und über ein Netzwerk zu einem von einem Endgerät des Interessenten betriebenen Frontend sendet. Derartige Verfahren werden von den meisten Online-Shops ausgeführt. Entsprechend ergeben sich für die Erfindung zahlreiche und vielfältige Anwendungen.

Bei dem erfindungsgemäßen Verfahren sendet ein von einem Endgerät eines ersten Nutzers betriebenes Frontend eines Kaufempfehlungsdiensts eine den ersten Nutzer, ein von dem ersten Nutzer zum Kaufen ausgewähltes Produkt und eine zum Bewerten des ausgewählten Produkts geeignete Nutzergruppe bestimmende Kaufempfehlungsanfrage über ein Netzwerk zu einem von einem stationären Server betriebenen Backend des Kaufempfehlungsdiensts, empfängt das Backend die Kaufempfehlungsanfrage und ermittelt das Backend eine Mehrzahl von zu der bestimmten geeigneten Nutzergruppe gehörenden zweiten Nutzern, berechnet das Backend für jeden ermittelten zweiten Nutzer eine eine Kompatibilität des zweiten Nutzers mit dem bestimmten Produkt angebende Akzeptanzwahrscheinlichkeit und einen Akzeptanzwert des bestimmten Produkts als eine über die zweiten Nutzer gemittelte Akzeptanzwahrscheinlichkeit und sendet das Backend den berechneten Akzeptanzwert als eine ermittelte Kaufempfehlung zu dem Frontend. Das Frontend und das Backend gehören zu dem Kaufempfehlungsdienst und werden jeweils von dem Endgerät und dem stationären Server in bekannter Weise ausgeführt. Das Frontend und das Backend führen das Verfahren gemeinsam aus, während das Endgerät und der stationäre Server über das Netzwerk verbunden sind.

Die Kaufempfehlungsanfrage umfasst Daten, welche den ersten Nutzer, das von dem ersten Nutzer zum Kaufen ausgewählte Produkt und eine zum Bewerten des ausgewählten Produkts geeignete Nutzergruppe bestimmen. Die Nutzergruppe wird demnach geeignet zum Bewerten des ausgewählten Produkts bestimmt, d.h. die der Kaufempfehlung zugrundeliegende Nutzergruppe ist nicht zufällig oder beliebig. Idealerweise ist die Nutzergruppe durch eine Beziehung zu dem ersten Nutzer definiert. Dank der Beziehung zu dem ersten Nutzer ist eine Relevanz der ermittelten Kaufempfehlung für den ersten Nutzer erhöht.

Das Verfahren verlangt lediglich eine Eignung der Nutzergruppe zum Bewerten des ausgewählten Produkts und kommt somit ohne ein aktives Mitwirken der Nutzergruppe aus. Auf diese Weise ist eine hohe Verlässlichkeit der Kaufempfehlung gewährleistet. Das Verfahren verlangt nicht, dass die Nutzergruppe das Produkt tatsächlich bewertet, und verwendet folglich auch keine Produktbewertung.

Zum Bestimmen des ersten Nutzers kann die Kaufempfehlungsanfrage einen Identifikator des ersten Nutzers, beispielsweise einen Benutzernamen des ersten Nutzers, umfassen.

In vielen Ausführungsformen bestimmt die Kaufempfehlungsanfrage das ausgewählte Produkt mittels eines Produktbilds, einer Produktbezeichnung oder einer Netzwerkadresse einer Produktseite. Jede der angegebenen Varianten identifiziert das ausgewählte Produkt eindeutig. Das Backend kann das ausgewählte Produkt in dem Produktbild mittels eines Bilderkennungsalgorithmus identifizieren. Das Backend kann das Produkt durch Lesen der Produktbezeichnung in der an der Netzwerkadresse bereitgestellten Produktseite identifizieren. Auch kann das Backend das Produkt unmittelbar aus der Netzwerkadresse, beispielsweise aus einem URL (Uniform Resource Locator), identifizieren, wenn das URL die Produktbezeichnung umfasst.

Die Kaufempfehlungsanfrage kann die Mehrzahl von zweiten Nutzern mittels eines von dem ersten Nutzer angegebenen Ortsbezeichners oder mittels eines von dem ersten Nutzer angegebenen sozialen Mediums bestimmen. Beide Varianten definieren einen für den ersten Nutzer relevanten sozialen Kontext. Der Ortsbezeichner definiert einen für den ersten Nutzer relevanten sozialen Kontext räumlich. Das soziale Medium (social media platform) definiert einen für den ersten Nutzer relevanten sozialen Kontext logisch.

Vorteilhaft gibt der erste Nutzer den Ortsbezeichner als eine eigene geographische Position, als eine Postanschrift und/oder als eine Schule, eine Universität, ein Unternehmen, eine Kultureinrichtung, einen Verein, eine Freizeiteinrichtung, ein Freizeitgebiet, eine Sehenswürdigkeit oder eine Wohnung an. Das Endgerät kann die eigene geographische Position mittels Satelliten (z.B. GPS/GLONASS/Galileo) erfassen für das Frontend bereitstellen. Zu den konkret bezeichneten Orten gehören gewöhnlich eine geographische Position und/oder eine Postanschrift sowie ein Ortstyp. Ausbildung, Arbeit, Kultur, Freizeit und Wohnen sind als Ortstypen zu verstehen.

Ein Schulgelände oder ein Universitätscampus als Ausbildungsorte, ein Unternehmensgelände als ein Arbeitsplatz, ein Museum oder eine Konzerthalle als Kultureinrichtungen, ein Vereinsgelände wie ein Fußballplatz, eine Freizeiteinrichtung wie ein Schwimmbad, ein Stadion, ein Cafe oder eine Kneipe, ein Freizeitgelände wie ein Strand, ein Wald oder ein Park, eine Sehenswürdigkeit wie eine Landmarke oder ein Denkmal oder ein Wohngebäude wie ein Einfamilienhaus oder ein Mehrfamilienhaus korrespondieren jeweils zu bestimmten sozialen Kontexten. Zweite Nutzer aus solchen sozialen Kontexten sind für eine Kaufempfehlung besonders relevant.

Bevorzugt ermittelt das Backend den zweiten Nutzer aufgrund einer von dem angegebenen Ortsbezeichner abhängigen Bedingung. Mit anderen Worten leitet das Backend aus dem Ortsbezeichner ein räumliches Kriterium für eine Zugehörigkeit zu der bestimmten Nutzergruppe ab.

Das Backend verwendet vorteilhaft eine Anordnung des zweiten Nutzers in einer von einem Typ des angegebenen Ortsbezeichners abhängigen Umgebung einer zu dem angegebenen Ortsbezeichner korrespondierenden geographischen Position umfassende Bedingung. Der zweite Nutzer gehört zu der bestimmte Nutzergruppe, wenn eine geographische Position des zweiten Nutzers von der Umgebung umfasst ist. Das Backend kann die geographische Position des zweiten Nutzers anhand eines Endgeräts des zweiten Nutzers ermitteln. Das Endgerät des zweiten Nutzers kann die eigene geographische Position mittels Satelliten (z.B. GPS/GLONASS/Galileo) erfassen und für das Backend bereitstellen. Alternativ oder zusätzlich kann das Backend die geographische Position des Endgeräts des zweiten Nutzers mittels einer logischen Position des Endgeräts innerhalb des Netzwerks ermitteln.

Wenn das Netzwerk beispielsweise als ein Funknetz ausgebildet ist, kann das Backend die geographische Position des Endgeräts des zweiten Nutzers mittels einer das Endgerät umfassenden Funkzelle des Funknetzes oder mittels Triangulierens ermitteln. Wenn das Netzwerk als ein kabelgebundenes Netz ausgebildet ist, kann das Backend die geographische Position des Endgeräts des zweiten Nutzers mittels einer IP-Adresse des Endgeräts oder mittels eines das Endgerät umfassenden IP-Subnetzes ermitteln.

Insbesondere kann das Backend eine eine Anordnung des zweiten Nutzers in der Umgebung während eines Zeitraums oder eine bezogen auf einen Zeitraum gleichzeitige Anordnung des ersten Nutzers und des zweiten Nutzers in der Umgebung umfassende Bedingung verwenden. Auf diese Weise kann eine Aktualität der geeigneten Nutzergruppe sichergestellt werden. Beispielsweise und nicht einschränkend können drei Tage als der Zeitraum verwendet werden. Die Gleichzeitigkeit bezieht sich auf den Zeitraum, d.h. der erste Nutzer und der zweite Nutzer gelten als gleichzeitig in der Umgebung angeordnet, wenn sowohl der erste Nutzer als auch der zweite Nutzer während des Zeitraums in der Umgebung angeordnet sind. Der erste Nutzer und der zweite Nutzer brauchen nicht zu demselben Zeitpunkt in der Umgebung angeordnet zu sein. Auf diese Weise wird neben der räumlichen auch eine zeitliche Gemeinsamkeit des zweiten Nutzers mit dem ersten Nutzer erzwungen.

Alternativ oder zusätzlich kann das Backend den zweiten Nutzer aufgrund einer durch das angegebene soziale Medium definierten Beziehung zu dem ersten Nutzer ermitteln. Beispielsweise kann das Backend den zweiten Nutzer als einen Gesprächspartner (chat), Freund (friend), Folger oder Verfolger (follower) des ersten Nutzers und dergleichen ermitteln.

Das Backend berechnet die Akzeptanzwahrscheinlichkeit bevorzugt abhängig von persönlichen Daten des zweiten Nutzers und/oder abhängig von Produktdaten des bestimmten Produkts und/oder abhängig von einer Produktbeziehung des zweiten Nutzers zu dem bestimmten Produkt. Die persönlichen Daten erlauben eine relative Gewichtung des zweiten Nutzers innerhalb der Nutzergruppe oder ggf. ein Ignorieren des zweiten Nutzers. Die Produktdaten und die Produktbeziehung des zweiten Nutzers erlauben ebenfalls eine relative Gewichtung des zweiten Nutzers innerhalb der Nutzergruppe.

Beispielsweise wird die Akzeptanzwahrscheinlichkeit abhängig von einem Alter und/oder einem Geschlecht als die persönliche Daten des zweiten Nutzers und/oder abhängig von einem Preis und/oder einer Qualität des bestimmten Produkts als die Produktdaten und/oder von einem zurückliegenden Betrachten oder Kaufen des bestimmten Produkts durch den zweiten Nutzer als die Produktbeziehung berechnet. Das ausgewählte Produkt kann sich beispielsweise an zweite Nutzer eines bestimmten Alters oder Geschlechts richten. Das ausgewählte Produkt kann sich beispielsweise an zweite Nutzer mit einer bestimmten Liquidität oder mit einem bestimmten Anspruch richten. Wenn zweite Nutzer das bestimmte Produkt früher bereits betrachtet oder sogar gekauft haben, kann eine hohe Kompatibilität des bestimmten Produkts mit den zweiten Nutzern angenommen werden.

Das Backend kann die persönlichen Daten, die Produktdaten und/oder die Produktbeziehungen von einem Zentralserver des Netzwerks, aus einer Produktdatenbank, aus einem sozialen Medium, einem von dem zweiten Nutzer akzeptierten Referenznutzer oder einer öffentlichen Einkaufshistorie oder Wunschliste des zweiten Nutzers empfangen. Der Zentralserver des Netzwerks kann persönliche Daten von Nutzern des Netzwerks bereitstellen. Die genannten Quellen der persönlichen Daten, der Produktdaten oder der Produktbeziehung sind nicht abschließend und bieten zumeist Programmierschnittstellen (application programming interface, API), welche ein einfaches Koppeln an den Kaufempfehlungsdienst ermöglichen.

In weiterentwickelten Ausführungsformen kann das Frontend nach einem Kaufen des ausgewählten Produkts durch den ersten Nutzer eine Kauferfolgsnachricht zu dem Backend senden und kann das Backend eine das Kaufen und das von dem ersten Nutzer gekaufte Produkt betreffende Werbenachricht zu jedem ermittelten zweiten Nutzer mit einer einen vorbestimmten Schwellwert überschreitenden berechneten Akzeptanzwahrscheinlichkeit senden. Die Kauferfolgsnachricht veranlasst das Backend, Werbenachrichten an zweite Nutzer zu versenden, welche das von dem ersten Nutzer gekaufte Produkt mit einer hinreichenden Wahrscheinlichkeit ebenfalls kaufen. Auf diese Weise kann das Verfahren den erfolgten Kauf des ausgewählten Produkts multiplizieren und einen Verkauf des ausgewählten Produkts fördern, was von großem wirtschaftlichen Interesse ist.

Vorteilhaft wird ein mobiles Endgerät als das Endgerät verwendet und/oder wird ein Funknetz als das Netzwerk verwendet und/oder wird ein stationärer Server des Netzwerks verwendet. Das mobile Endgerät kann als ein Smartphone, ein Tablet, ein Notebook oder ein Desktop-Rechner ausgebildet sein. Das Funknetz kann als ein Mobilfunknetz oder ein WLAN ausgebildet sein. Selbstverständlich kann auch ein kabelgebundenes Netz wie ein Ethernet-Netzwerk als das Netzwerk verwendet werden.

Noch ein Gegenstand der Erfindung ist ein Kaufempfehlungsdienst, mit einem Frontend und einem Backend, welche konfiguriert sind, gemeinsam ein erfindungsgemäßes Verfahren auszuführen, wenn das Frontend von einem Endgerät und das Backend von einem stationären Server betrieben werden und das Endgerät und der stationäre Server mittels eines Netzwerks verbunden sind. Der Kaufempfehlungsdienst ist als eine verteilte Anwendung einfach in vorhandene Kaufanwendungen, beispielsweise Online-Shops, zu integrieren. Der Kaufempfehlungsdienst verwendet keine tatsächliche Produktbewertung und gewährleistet eine hohe Verlässlichkeit und eine hohe Relevanz einer Kaufempfehlung für den Interessenten.

Ein weiterer Gegenstand der Erfindung ist ein Computerprogrammprodukt, umfassend eine von einem Endgerät oder einem stationären Server lesbare Speichervorrichtung mit einem in der Speichervorrichtung gespeicherten jeweiligen Programmcode, welcher das Endgerät oder den stationären Server veranlasst, jeweils ein Frontend oder ein Backend eines erfindungsgemäßen Kaufempfehlungsdiensts zu betreiben, wenn der Programmcode von einem jeweiligen Prozessor des Endgeräts oder des stationären Servers ausgeführt wird. Die Speichervorrichtung kann als ein bezogen auf das Endgerät oder den stationären Server externes Speichermedium wie eine CD-ROM, eine DVD, ein USB-Stick, ein Cloudspeicher und dergleichen oder als ein bezogen auf das Endgerät oder den stationären Server internes Speichermedium, wie einen Arbeitsspeicher oder eine Festplatte, ausgebildet sein. Abgesehen davon kann das Computerprogramm für ein sofortiges Ausführen des Programmcodes oder ein Ausführen des Programmcodes nach einem vorherigen Installieren auf dem Endgerät oder dem stationären Server vorgesehen sein.

Ein wesentlicher Vorteil des erfindungsgemäßen Verfahrens besteht darin, dass das Verfahren keine tatsächliche Produktbewertung verwendet und eine hohe Verlässlichkeit und eine hohe Relevanz einer Kaufempfehlung für den Interessenten gewährleistet. Weiterhin vorteilhaft ist, dass sich der das Verfahren ausführende Kaufempfehlungsdienst einfach in vorhandene Kaufanwendungen, beispielsweise Online-Shops, integrieren lässt. Abgesehen davon kann der Kaufempfehlungsdienst als eine selbständige an Interessenten gerichtete Dienstleistung mit eigener wirtschaftlicher Bedeutung angeboten werden.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

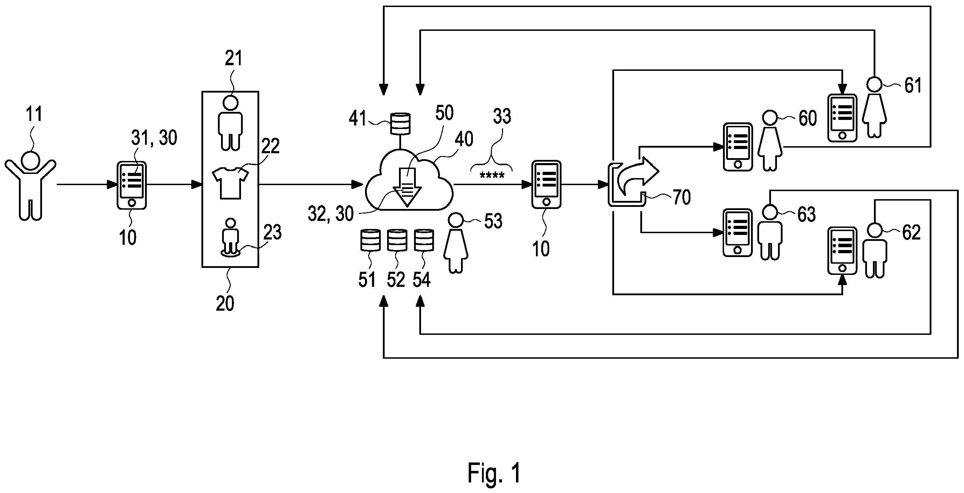

Die Erfindung ist anhand eines Ausführungsbeispiels in der Zeichnung schematisch dargestellt und wird im Folgenden unter Bezugnahme auf die Zeichnung ausführlich beschrieben. Es zeigt
- Fig. 1: ein Anwendungsfalldiagramm für einen Kaufempfehlungsdienst nach einer Ausführungsform der Erfindung.

In der Zeichnung sind korrespondierende Merkmale mit identischen Bezugszeichen versehen.

Figur 1 zeigt ein Anwendungsfalldiagramm für einen Kaufempfehlungsdienst 30 nach einer Ausführungsform der Erfindung. Zu dem Kaufempfehlungsdienst 30 gehören ein Frontend 31 und ein Backend 32. Das Frontend 31 ist konfiguriert von einem Endgerät 10 ausgeführt zu werden. Das Backend 32 ist konfiguriert, von einem stationären Server 50 ausgeführt zu werden.

Der Kaufempfehlungsdienst 30 kann mittels eines Computerprogrammprodukts implementiert sein, welches eine von dem Endgerät 10 oder dem stationären Server 50 lesbare Speichervorrichtung mit einem in der Speichervorrichtung gespeicherten jeweiligen Programmcode umfasst. Der Programmcode veranlasst das Endgerät 10 oder den stationären Server 50, jeweils das Frontend 31 oder das Backend 32 des Kaufempfehlungsdiensts 30 zu betreiben, wenn der Programmcode von einem jeweiligen Prozessor des Endgeräts 10 oder des stationären Servers 50 ausgeführt wird.

Das Frontend 31 und das Backend 32 sind ferner konfiguriert, gemeinsam ein nachfolgend beschriebenes Verfahren zum Ermitteln einer Kaufempfehlung 33 auszuführen, wenn das Frontend 31 von dem Endgerät 10 und das Backend 32 von dem stationären Server 50 betrieben werden und das Endgerät 10 und der stationäre Server 50 mittels eines Netzwerks 40 verbunden sind.

Während des Verfahrens sind das Endgerät 10 und der stationäre Server 50 mit einem Netzwerk 40 verbunden. Für das Verfahren können vorteilhaft ein mobiles Endgerät als das Endgerät 10 und/oder ein Funknetz als das Netzwerk 40 und/oder ein stationärer Server 50 des Netzwerks 40 verwendet werden.

Das Verfahren zum Ermitteln der Kaufempfehlung 33 umfasst die Schritte:
Das von dem Endgerät 10 eines ersten Nutzers 11 betriebene Frontend 31 sendet eine Kaufempfehlungsanfrage 20 über das Netzwerk 40 zu dem von dem dem stationären Server 50 betriebenen Backend 32. Die Kaufempfehlungsanfrage 20 bestimmt den ersten Nutzer 11, ein von dem ersten Nutzer 11 zum Kaufen ausgewähltes Produkt 22 und eine zum Bewerten des ausgewählten Produkts 22 geeignete Nutzergruppe 23.

Die Kaufempfehlungsanfrage 20 kann das ausgewählte Produkt 22 mittels eines Produktbilds, einer Produktbezeichnung oder einer Netzwerkadresse einer Produktseite bestimmen.

Die Kaufempfehlungsanfrage 20 bestimmt bevorzugt die Mehrzahl von zweiten Nutzern 60, 61, 62, 63 mittels eines von dem ersten Nutzer 11 angegebenen Ortsbezeichners oder mittels eines von dem ersten Nutzer 11 angegebenen sozialen Mediums.

Der erste Nutzer 11 kann den Ortsbezeichner als eine eigene geographische Position, eine Postanschrift und/oder als eine Schule, ein Unternehmen, einen Verein, eine Freizeiteinrichtung, ein Freizeitgebiet oder eine Wohnung angeben.

Das Backend 32 empfängt die Kaufempfehlungsanfrage 20 und ermittelt eine Mehrzahl von zu der bestimmten geeigneten Nutzergruppe 23 gehörenden zweiten Nutzern 60, 61, 62, 63.

Dann kann das Backend 32 den zweiten Nutzer 60, 61, 62, 63 aufgrund einer von dem angegebenen Ortsbezeichner abhängigen Bedingung ermitteln.

Insbesondere kann das Backend 32 dafür eine Bedingung verwenden, welche eine Anordnung des zweiten Nutzers 60, 61, 62, 63 in einer von einem Typ des angegebenen Ortsbezeichners abhängigen Umgebung einer zu dem angegebenen Ortsbezeichner korrespondierenden geographischen Position umfasst.

Vorteilhaft kann die Bedingung eine Anordnung des zweiten Nutzers 60, 61, 62, 63 in der Umgebung während eines Zeitraums oder eine bezogen auf einen Zeitraum gleichzeitige Anordnung des ersten Nutzers 11 und des zweiten Nutzers 60, 61, 62, 63 in der Umgebung umfassen.

Das Backend 32 kann den zweiten Nutzer 60, 61, 62, 63 alternativ oder zusätzlich aufgrund einer durch das angegebene soziale Medium definierten Beziehung zu dem ersten Nutzer 11 ermitteln.

Das Backend 32 berechnet für jeden ermittelten zweiten Nutzer 60, 61, 62, 63 eine eine Kompatibilität des zweiten Nutzers 60, 61, 62, 63 mit dem bestimmten Produkt 22 angebende Akzeptanzwahrscheinlichkeit.

Vorteilhaft berechnet das Backend 32 die Akzeptanzwahrscheinlichkeit abhängig von persönlichen Daten des zweiten Nutzers 60, 61, 62, 63 und/oder abhängig von Produktdaten des bestimmten Produkts 22 und/oder abhängig von einer Produktbeziehung des zweiten Nutzers 60, 61, 62, 63 zu dem bestimmten Produkt 22.

Insbesondere kann die Akzeptanzwahrscheinlichkeit abhängig von einem Alter und/oder einem Geschlecht als die persönlichen Daten des zweiten Nutzers 60, 61, 62, 63 und/oder abhängig von einem Preis und/oder einer Qualität des bestimmten Produkts 22 als die Produktdaten und/oder von einem zurückliegenden Betrachten oder Kaufen des bestimmten Produkts 22 durch den zweiten Nutzer 60, 61, 62, 63 als die Produktbeziehung berechnet werden.

Die persönlichen Daten, die Produktdaten und/oder die Produktbeziehung kann das Backend 32 von einem Zentralserver 41 des Netzwerks 40, aus einer Produktdatenbank 51, aus einem sozialen Medium 52, einem von dem zweiten Nutzer 60, 61, 62, 63 akzeptierten Referenznutzer 53 oder einer öffentlichen Einkaufshistorie oder Wunschliste 54 des zweiten Nutzers 60, 61, 62, 63 empfangen.

Das Backend 32 berechnet einen Akzeptanzwert des bestimmten Produkts 22 als eine über die zweiten Nutzer 60, 61, 62, 63 gemittelte Akzeptanzwahrscheinlichkeit.

Das Backend 32 sendet den berechneten Akzeptanzwert als eine ermittelte Kaufempfehlung 33 zu dem Frontend 31.

Anschließend kann das Frontend 31 nach einem Kaufen des ausgewählten Produkts 22 durch den ersten Nutzer 11 eine Kauferfolgsnachricht zu dem Backend 32 senden. Daraufhin kann das Backend 32 eine Werbenachricht 70, welche das Kaufen und das von dem ersten Nutzer 11 gekaufte Produkt 22 betrifft, zu jedem ermittelten zweiten Nutzer 60, 61, 62, 63 senden, welcher eine einen vorbestimmten Schwellwert überschreitende berechnete Akzeptanzwahrscheinlichkeit aufweist.

### Bezugszeichenliste

- 10: Endgerät
- 11: erster Nutzer
- 20: Kaufempfehlungsanfrage
- 21: Identifikator
- 22: Produkt
- 23: Nutzergruppe
- 30: Kaufempfehlungsdienst
- 31: Frontend
- 32: Backend
- 33: Kaufempfehlung
- 40: Netzwerk
- 41: Zentralserver
- 50: stationärer Server
- 51: Produktdatenbank
- 52: soziales Medium
- 53: Referenznutzer
- 54: öffentliche Einkaufshistorie oder Wunschliste
- 60: zweiter Nutzer
- 61: zweiter Nutzer
- 62: zweiter Nutzer
- 63: zweiter Nutzer
- 70: Werbenachricht

## Patentansprüche

1. Verfahren zum Ermitteln einer Kaufempfehlung (33), bei dem
- ein von einem Endgerät (10) eines ersten Nutzers (11) betriebenes Frontend (31) eines Kaufempfehlungsdiensts (30) eine den ersten Nutzer (11), ein von dem ersten Nutzer (11) zum Kaufen ausgewähltes Produkt (22) und eine zum Bewerten des ausgewählten Produkts (22) geeignete Nutzergruppe (23) bestimmende Kaufempfehlungsanfrage (20) über ein Netzwerk (40) zu einem von einem stationären Server (50) betriebenen Backend (32) des Kaufempfehlungsdiensts (30) sendet;
- das Backend (32) die Kaufempfehlungsanfrage (20) empfängt und eine Mehrzahl von zu der bestimmten geeigneten Nutzergruppe (23) gehörenden zweiten Nutzern (60, 61, 62, 63) ermittelt;
- das Backend (32) für jeden ermittelten zweiten Nutzer (60, 61, 62, 63) eine eine Kompatibilität des zweiten Nutzers (60, 61, 62, 63) mit dem bestimmten Produkt (22) angebende Akzeptanzwahrscheinlichkeit und einen Akzeptanzwert des bestimmten Produkts (22) als eine über die zweiten Nutzer (60, 61, 62, 63) gemittelte Akzeptanzwahrscheinlichkeit berechnet;
- das Backend (32) den berechneten Akzeptanzwert als eine ermittelte Kaufempfehlung (33) zu dem Frontend (31) sendet.

2. Verfahren nach Anspruch 1, bei dem die Kaufempfehlungsanfrage (20) das ausgewählte Produkt (22) mittels eines Produktbilds, einer Produktbezeichnung oder einer Netzwerkadresse einer Produktseite bestimmt.

3. Verfahren nach Anspruch 1 oder 2, bei dem die Kaufempfehlungsanfrage (20) die Mehrzahl von zweiten Nutzern (60, 61, 62, 63) mittels eines von dem ersten Nutzer (11) angegebenen Ortsbezeichners oder mittels eines von dem ersten Nutzer (11) angegebenen sozialen Mediums bestimmt.

4. Verfahren nach Anspruch 3, bei dem der erste Nutzer (11) den Ortsbezeichner als eine eigene geographische Position, als eine Postanschrift und/oder als eine Schule, ein Unternehmen, einen Verein, eine Freizeiteinrichtung, ein Freizeitgebiet, eine Sehenswürdigkeit oder eine Wohnung angibt.

5. Verfahren nach Anspruch 3 oder 4, bei dem das Backend (32) den zweiten Nutzer (60, 61, 62, 63) aufgrund einer von dem angegebenen Ortsbezeichner abhängigen Bedingung ermittelt.

6. Verfahren nach Anspruch 5, bei dem das Backend (32) eine eine Anordnung des zweiten Nutzers (60, 61, 62, 63) in einer von einem Typ des angegebenen Ortsbezeichners abhängigen Umgebung einer zu dem angegebenen Ortsbezeichner korrespondierenden geographischen Position umfassende Bedingung verwendet.

7. Verfahren nach Anspruch 6, bei dem das Backend (32) eine eine Anordnung des zweiten Nutzers (60, 61, 62, 63) in der Umgebung während eines Zeitraums oder eine bezogen auf einen Zeitraum gleichzeitige Anordnung des ersten Nutzers (11) und des zweiten Nutzers (60, 61, 62, 63) in der Umgebung umfassende Bedingung verwendet.

8. Verfahren nach einem der Ansprüche 3 bis 7, bei dem das Backend (32) den zweiten Nutzer (60, 61, 62, 63) aufgrund einer durch das angegebene soziale Medium definierten Beziehung zu dem ersten Nutzer (11) ermittelt.

9. Verfahren nach einem der Ansprüche 1 bis 8, bei dem das Backend (32) die Akzeptanzwahrscheinlichkeit abhängig von persönlichen Daten des zweiten Nutzers (60, 61, 62, 63) und/oder abhängig von Produktdaten des bestimmten Produkts (22) und/oder abhängig von einer Produktbeziehung des zweiten Nutzers (60, 61, 62, 63) zu dem bestimmten Produkt (22) berechnet.

10. Verfahren nach Anspruch 9, bei dem die Akzeptanzwahrscheinlichkeit abhängig von einem Alter und/oder einem Geschlecht als die persönliche Daten des zweiten Nutzers (60, 61, 62, 63) und/oder abhängig von einem Preis und/oder einer Qualität des bestimmten Produkts (22) als die Produktdaten und/oder von einem zurückliegenden Betrachten oder Kaufen des bestimmten Produkts (22) durch den zweiten Nutzer (60, 61, 62, 63) als die Produktbeziehung berechnet wird.

11. Verfahren nach Anspruch 9 oder 10, bei dem das Backend (32) die persönlichen Daten, die Produktdaten und/oder die Produktbeziehung von einem Zentralserver (41) des Netzwerks (40), aus einer Produktdatenbank (51), aus einem sozialen Medium (52), einem von dem zweiten Nutzer (60, 61, 62, 63) akzeptierten Referenznutzer (53) oder einer öffentlichen Einkaufshistorie oder Wunschliste (54) des zweiten Nutzers (60, 61, 62, 63) empfängt.

12. Verfahren nach einem der Ansprüche 1 bis 11, bei dem das Frontend (31) nach einem Kaufen des ausgewählten Produkts (22) durch den ersten Nutzer (11) eine Kauferfolgsnachricht zu dem Backend (32) sendet und das Backend (32) eine das Kaufen und das von dem ersten Nutzer (11) gekaufte Produkt (22) betreffende Werbenachricht (70) zu jedem ermittelten zweiten Nutzer (60, 61, 62, 63) mit einer einen vorbestimmten Schwellwert überschreitenden berechneten Akzeptanzwahrscheinlichkeit sendet.

13. Verfahren nach einem der Ansprüche 1 bis 12, bei dem ein mobiles Endgerät als das Endgerät (10) verwendet wird und/oder ein Funknetz als das Netzwerk (40) verwendet wird und/oder ein stationärer Server (50) des Netzwerks (40) verwendet wird.

14. Kaufempfehlungsdienst (30), mit einem Frontend (31) und einem Backend (32), welche konfiguriert sind, gemeinsam ein Verfahren nach einem der Ansprüche 1 bis 13 auszuführen, wenn das Frontend (31) von einem Endgerät (10) und das Backend (32) von einem stationären Server (50) betrieben werden und das Endgerät (10) und der stationäre Server (50) mittels eines Netzwerks (40) verbunden sind.

15. Computerprogrammprodukt, umfassend eine von einem Endgerät (10) oder einem stationären Server (50) lesbare Speichervorrichtung mit einem in der Speichervorrichtung gespeicherten jeweiligen Programmcode, welcher das Endgerät (10) oder den stationären Server (50) veranlasst, jeweils ein Frontend (31) oder ein Backend (32) eines Kaufempfehlungsdiensts (30) nach Anspruch 14 zu betreiben, wenn der Programmcode von einem jeweiligen Prozessor des Endgeräts (10) oder des stationären Servers (50) ausgeführt wird.
